# EUROPÄISCHE PATENTSCHRIFT

(11) **EP 0 742 115 B1**
(45) Veröffentlichungstag und Bekanntmachung des Hinweises auf die Patenterteilung: **25.07.2001**
(21) Anmeldenummer: 96106887.1
(22) Anmeldetag: 02.05.1996
(51) Int. Cl.: B60H 1/24

(54) **Entlüftungsvorrichtung zur Entlüftung des Innenraumes eines Kraftfahrzeugs**
Venting device for venting the interior of a vehicle
Appareil de ventilation pour ventiler l'interieur d'un vehicule

(30) Priorität: 10.05.1995 DE 19517157
(43) Veröffentlichungstag der Anmeldung: 13.11.1996
(73) Patentinhaber: ADAM OPEL AG, 65423 Rüsselsheim (DE)
(72) Erfinder: Fleischer, Dieter, Dipl.-Ing., 65474 Bischofsheim (DE)

(56) Entgegenhaltungen:
- EP-A- 0 306 073
- EP-A- 0 673 795
- DE-A- 3 503 600
- DE-A- 3 709 244
- US-A- 2 223 709

## Beschreibung

Die Erfindung bezieht sich auf eine Entlüftungsvorrichtung für Kraftfahrzeuge nach dem Oberbegriff des Patentanspruchs 1. Abschlußklappen dieser Vorrichtungen verschließen eine Öffnung zum Innenraum des Kraftfahrzeugs, sind aber in Abhängigkeit von Luftdruckdifferenzen zwischen dem Innenraum und der Fahrzeugumgebung in Offenstellungen beweglich. Diese Klappen dienen als Rückluftsperre, da das unkontrollierte Eindringen von Luft und Wasser in den Innenraum zu verhindern ist. Luft aus dem Innenraum soll aber möglichst ungehindert austreten können.

Entlüftungsvorrichtungen dieser Art sind bekannt. Beispielsweise in der DE-OS 37 09 244 ist eine solche Vorrichtung mit hängend angeordneten Abschlußklappen aufgezeigt, wobei hier besondere Vorkehrungen gegen das mögliche geräuschintensive Flattern der Klappen getroffen sind. Das Flattern tritt auf, da mit zunehmender Öffnung der Abschlußklappen ihr Bestreben, sich in die Schließstellung zurückzubewegen, immer größer wird. Dies ist der Fall, da das Eigengewicht der Klappen mit zunehmender Klappenöffnung immer stärker wirkt und auch elastische Rückstellkräfte innerhalb der Klappe (im Bereich der Klappenachse, die von einem elastischen Klappenabschnitt definiert ist) immer größer werden.

Vergleichbare Vorrichtungen sind auch aus der DE-PS 35 03 600, DE-OS 38 12 346, DE-PS 40 02 052, DE-OS 41 06 999 oder aus der DE-PS 43 22 213 bekannt, wobei bei allen Lösungen der gleiche Nachteil besteht: Die Schließkraft der Klappe vergrößert sich mit zunehmender Klappenöffnung.

Eine andersartige Lösung nach der DE-PS 36 01 853 hat gleiche Nachteile. Eine Feder bewirkt das Halten eines Verschlußelementes in der Schließstellung nach Art eines Überdruckventils.

Eine weitere Ausführung mit komplizierter Sensorik und Steuerungstechnik erscheint zu aufwendig (DE-OS 33 20 551).

Aus US-A-2 223 709 ist eine Entlüftungsöffnung bekannt, deren Klappe durch Gewichtskraft in der Schließstellung verweilt, die sich jedoch im geöffneten Zustand im Luftstrom befindet. Das in Richtung Schließstellung wirkende Drehmoment vergrößert sich zunächst beim Öffnen der Klappe.

Bei allen bekannten Entlüftungsvorrichtungen bestehen Probleme bezüglich des Wasserablaufs. In das Gehäuse eingedrungenes Wasser kann nicht frei ablaufen und führt zur Rostbildung im angrenzenden Karosseriebereich. Teilweise ist sogar das Eindringen von Wasser in den Fahrzeuginnenraum möglich.

Es ist Aufgabe der Erfindung, eine einfache und mit geringem Aufwand herstellbare Entlüftungsvorrichtung der oben angegebenen Art dahingehend zu verbessern, daß eine störungsfreie Rückluftklappenfunktion gegeben ist, also das Eindringen von Außenluft und Wasser in das Fahrzeuginnere sowie das Flattern von Klappen wirksam verhindert wird.

Zur Lösung dieser Aufgabe ist die Entlüftungsvorrichtung nach dem Oberbegriff des Patentanspruchs 1 durch die in diesem Patentanspruch angegebenen kennzeichnenden Merkmale ausgebildet. Vorteilhafte Weiterbildungen der Erfindung ergeben sich aus den Patentansprüchen 2 bis 7.

Der Erfindung liegt die Erkenntnis zugrunde, daß sich bei allen bekannten Entlüftungsvorrichtungen das Drehmoment in Richtung der Schließstellung beim Öffnen der Abschlußklappen vergrößert. Dazu kommen ggf. größer werdende elastische Kräfte, die beim Verschwenken der Klappe auftreten. Ein zur Fahrzeugumgebung gerichteter Luftstrom drückt die Klappen auf und passiert eine dadurch entstehende Öffnung. Der Öffnung der Klappe wirken die genannten Kräfte nach Art von Federkräften entgegen und ein Schwingungssystem, welches zum Flattern der Klappen führt, entsteht. Die erfindungsgemäße Anordnung vermeidet dies, in dem die Klappen derart zu ihren Achsen angeordnet sind, daß sich die Länge eines Hebelarmes, an dem die Gewichtskraft der Klappen wirkt, beim Öffnen der Klappen nicht vergrößert, sondern verringert. Somit wird beim Öffnen der Klappe auch ein aus ihrem Eigengewicht resultierendes Drehmoment um die Klappenachse geringer. Ist im Fahrzeuginnenraum ein bestimmter Überdruck gegenüber der Umgebung vorhanden, beginnt sich die Klappe zu öffnen. Der Öffnung wirken dann immer geringer werdende Kräfte entgegen und die Klappe bewegt sich in die vollständig geöffnete Position. Je nach Beschaffenheit der Achse der Klappe bzw. ihrer Lagerung im Gehäuse der Entlüftungsvorrichtung können zwar die genannten elastischen Kräfte noch bei der Klappenöffnung ansteigen, diese sind aber so gering bzw. vernachlässigbar klein, daß der Effekt des geringer werdenden Drehmomentes nicht aufgehoben wird. Ein Klappenflattern ist somit wirksam auszuschließen. Das gewünschte Ziel der Verringerung der Hebelarmlänge wird erreicht, wenn eine Vertikalebene durch die Klappenachse und eine Klappenebene, die von der geschlossenen Klappe definiert wird, einen Winkel von kleiner oder gleich 90° einschließen und sich dieser Winkel beim Öffnen der Klappe verringert. Bei horizontaler Ausrichtung der Klappenachse heißt dies, daß auch die Klappenebene horizontal liegt und sich die Abschlußklappen nach oben öffnen. Dies hat aus Designgründen jedoch kaum Bedeutung für das Kraftfahrzeug. Von Vorteil ist eine geneigt aufrecht stehende Achsenanordnung, wobei sich die einzelnen Klappen dann bis maximal in die Vertikalebene, in der ihre Achsen liegen, bewegen können. In dieser maximal geöffneten Position würde dann kein Drehmoment mehr aus dem Eigengewicht der Klappen resultieren. Die Neigung der Achse sollte je nach Gewicht der Klappe sowie der gewünschten Mindest-Öffnungskraft (die Kraft auf die Klappe, bei der sie beginnt, sich zu öffnen) zumindest 5° zur Vertikalen betragen, da sonst nicht gewährleistet ist, daß die Klappe sicher in ihrer Schließstellung verharrt, wenn keine Druckdifferenzen auftreten.

Bei der erfindungsgemäßen Entlüftungsvorrichtung werden sich die Abschlußklappen mehr als bisher üblich in ihrer maximal geöffneten Position befinden. In diesen Zeitphasen kann Wasser von außen unter Umständen in das Gehäuse der Entlüftungsvorrichtung eindringen. Wasser könnte sich auch auf anderen Wegen an Wandungen des Gehäuses sammeln. Ein sicherer Wasserablauf nach außen wird garantiert, in dem obere und untere Begrenzungswände des Gehäuses in Richtung der Fahrzeugumgebung geneigt angeordnet sind. So kann Wasser direkt ablaufen oder läuft durch Bohrungen ab, die im Gehäuse vorgesehen sind. Tief in das Gehäuse eindringendes Spritzwasser kann durch ein Wasserfangvlies zwischen den Abschlußklappen und dem Fahrzeuginnenraum abgefangen und nach unten auf die untere Begrenzungswand abgeleitet werden.

Ein Ausführungsbeispiel wird im folgenden zur detaillierten Verdeutlichung der Erfindung beschrieben. Von den zugehörigen Zeichnungen zeigt im einzelnen:
- Fig. 1:: eine Seitenansicht auf einen Abschnitt einer Kraftfahrzeugkarosserie mit einer Entlüftungsvorrichtung gemäß der Erfindung;
- Fig. 2:: eine Draufsicht auf die Entlüftungsvorrichtung nach Fig. 1 in geschnittener Darstellungsweise;
- Fig. 3:: eine Seitenansicht auf die Entlüftungsvorrichtung nach den Fig. 1 und 2 bei Sicht in Richtung des Pfeils S in Fig. 1 in geschnittener Darstellungsweise;
- Fig. 4:: ein Diagramm zur qualitativen Verdeutlichung der wirkenden Kräfte bei Öffnung einer Abschlußklappe der Entlüftungsvorrichtung nach den Fig. 1 bis 3.

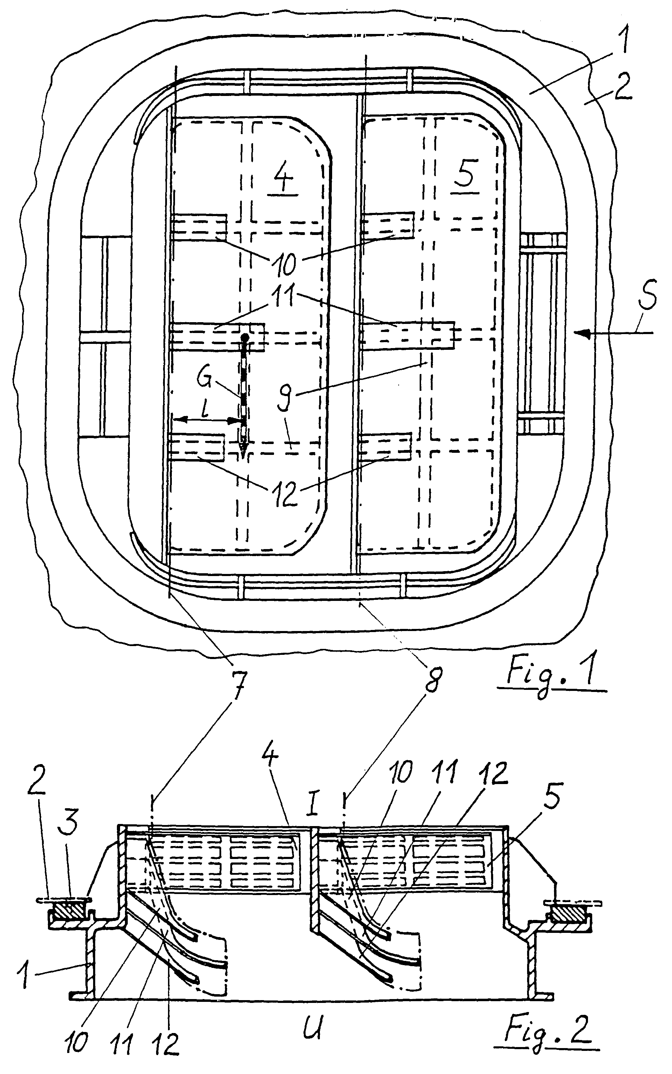

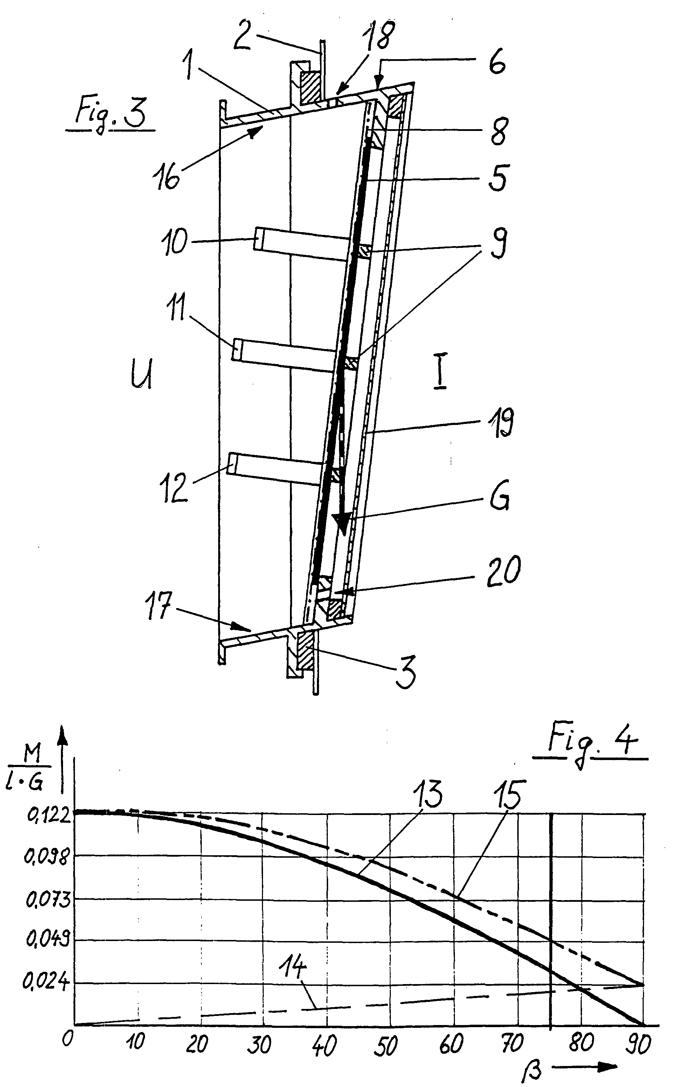

Aus den in den Fig. 1 bis 3 gezeigten drei Ansichten einer Entlüftungsvorrichtung für ein Kraftfahrzeug ist der prinzipielle Aufbau einer solchen Vorrichtung erkennbar, wobei die Darstellung schematischen Charakter hat. Ein Gehäuse 1 der Entlüftungsvorrichtung ist in eine Karosserieöffnung 2 eingesetzt. Es ist eine umlaufende Dichtung 3 vorgesehen. Die Art und Weise der Halterung des Gehäuses 1 in der Öffnung 2 ist nicht näher darstellt.

Im Gehäuse 1 sind zwei Abschlußklappen 4, 5 derart gehaltert, daß sie in etwa in einer Ebene 6 liegen und jeweils um eine Achse 7, 8 verschwenkbar sind. Die Ebene 6 wird von einem Gitter 9 definiert, wobei die sich in einer Schließstellung befindlichen Abschlußklappen 4, 5 auf dem Gitter 9 aufliegen und dabei die vom Gitter 9 gebildeten Freiräume verschließen. Ein Einklappen der Abschlußklappen 4, 5 in Richtung eines Fahrzeuginnenraumes I wird durch das Gitter 9 verhindert. In Richtung einer Fahrzeugumgebung U sind die Abschlußklappen 4, 5 beweglich, in dem sie um ihre Achsen 7, 8 nach außen verschwenken.

Die Abschlußklappen 4, 5 bestehen aus relativ leichtem flexiblem Material. Sie sind im Bereich der Achsen 7, 8 im Gehäuse 1 eingespannt. Damit handelt es sich bei den Achsen 7, 8 um keine Schwenkachsen im bekannten Sinn, sondern das Abschlußklappen-Material ist im Bereich der Achsen 7, 8 einknickbar nach Art eines Filmscharniers. Entweder im Bereich der Achsen 7, 8 ist eine Soll-Knickstelle im Material der Klappen 4, 5 vorgesehen, oder die Abschlußklappen bestehen insgesamt aus sehr biegsamen Material. Auch eine Lagerung der Klappen 4, 5 an Schwenkachsen, die sich im Gehäuse 1 abstützen, ist ausführbar. Letztlich können die Abschlußklappen 4, 5 auch einteilig mit dem Gehäuse 1 gefertigt sein, wobei im Bereich der Achsen 7, 8 dann das bereits genannte Filmscharnier vorzusehen ist.

Die Abschlußklappen 4, 5 trennen den Fahrzeuginnenraum I von der Fahrzeugumgebung U nach Art eines Rückschlagventils, woraus sich auch die gebräuchliche Bezeichnung Rückluftklappe ergibt. Ist der Luftdruck in der Fahrzeugumgebung U höher als der im Innenraum I, werden die Abschlußklappen 4, 5 gegen das Gitter 9 gepreßt. Unkontrolliertes Eindringen von Luft und Wasser wird ausgeschlossen. Ist jedoch der Luftdruck im Innenraum I um ein bestimmtes Maß höher als der Umgebungsdruck, verschwenken die Klappen 4, 5 selbsttätig um ihre Achsen 7, 8 in Richtung Umgebung U, wobei dann Luft durch das Gitter 9 austreten kann. Die mögliche Schwenkbewegung der Klappen 4, 5 wird durch jeweils drei Stege 10, 11, 12 begrenzt.

Die Klappen 4, 5 können sich um etwa 75° um die Achsen 7, 8 nach außen bewegen, bis sie an den gekrümmten Rändern der Stege 10, 11, 12 anliegen. Die gewählte Form der Stege 10, 11, 12 ist hierbei nicht erfindungswesentlich.

Die Ebene 6, in der die geschlossenen Abschlußklappen 4, 5 liegen, ist im Ausführungsbeispiel um etwa 7° zur Vertikalen geneigt, könnte jedoch auch noch etwas steiler stehen oder auch wesentlich stärker (bis zu 90°) geneigt sein. Die Achsen 7, 8 der Klappen 4, 5 liegen in der Ebene 6. Erfindungswesentlich ist, daß eine gedachte Vertikalebene, in der jeweils eine der Achsen 7 oder 8 liegt, mit der Ebene 6 einen Winkel von maximal 90° einschließt. Dadurch wird erreicht, daß sich ein Schwerpunkt der Klappen 4, 5 beim Öffnen der Klappen 4, 5 immer mehr der genannten Vertikalebene annähert. Ein als Hebelarm wirkender Abstand des Schwerpunktes von der Vertikalebene wird geringer, wodurch ein aus der Gewichtskraft G der Klappen 4, 5 resultierendes Drehmoment M um die Achsen 7, 8 in Richtung der Schließstellung ebenfalls beim Öffnen der Klappen 4, 5 immer geringer wird.

Somit wirken der beginnenden Klappenöffnung die größten Kräfte entgegen. Sind die Klappen 4, 5 erst einmal um 5 bis 10° offen, erfolgt die weitere Öffnungsbewegung durch immer geringer werdende Kräfte, da die Klappen 4, 5 ein immer geringer werdendes Bestreben haben, sich in die Schließstellung zu bewegen. Im gezeigten Ausführungsbeispiel beträgt das aus der Gewichtskraft G resultierende Drehmoment M um die Achsen 7, 8 bei der maximalen Öffnung (75°) der Klappen 4, 5 nur noch etwa ein Viertel des Drehmomentes M, das in der Schließstellung wirkt. Dies wird im folgenden mit Bezug auf Fig. 4 erläutert: Die Gewichtskraft G jeder Klappe 4, 5 wirkt in ihrem Schwerpunkt, der im Abstand 1 zu der jeweils zugehörigen Achse 7, 8 liegt. Bei der gewählten Anordnung (7° geneigte Ebene 6, die die Vertikalebenen durch die Achsen 7, 8 senkrecht schneidet) ergibt sich das aus der Gewichtskraft G resultierende Drehmoment M um die Achsen 7, 8: M = 1 x G x sin 7° = 1 x G x 0,122. Öffnen sich die Klappen 4, 5 um jeweils den Winkel β, wirkt die Gewichtskraft G am Hebelarm 1 x cos β (bei geschlossener Klappe 4, 5 ist β = 0 und damit cos β = 1). Bei einer Klappenöffnung von β = 60° wirkt die Gewichtskraft damit nur noch an dem Hebelarm 1 x 0,5. Es ergibt sich die in Fig. 4 durchgehend gezeichnete Kennlinie 13. Mit zunehmendem Öffnungswinkel β sind kleiner werdende Faktoren ablesbar, die multipliziert mit der Länge l und der Gewichtskraft G das wirkende Drehmoment M ergeben.

In Fig. 4 ist des weiteren eine Gerade 14 aufgezeigt, die mit zunehmendem Öffnungswinkel β ansteigt. Diese Gerade 14 erlaubt die Bestimmung eines weiteren Faktors, der multipliziert mit 1 und G ein Drehmoment M ergibt, welches notwendig ist, um die Klappen 4, 5 im Bereich ihrer Achsen 7, 8 zu knicken. Dies erfolgt nach Art einer Feder, wobei der lineare Verlauf idealisiert ist. Um ein Filmscharnier oder das Klappenmaterial zu knicken, sind sehr geringe, jedoch zunehmende Kräfte erforderlich. Letztlich stellt die Kurve 15 in Fig. 4 eine Summe der Kurven 13 und 14 dar und kommt den praktischen Bedingungen sehr nahe. Auch die resultierende Kurve 15 hat einen abfallenden Verlauf.

Es bestehen jetzt diverse Möglichkeiten zur Gestaltung der Entlüftungsvorrichtung, wodurch festgelegt wird, bei welcher Druckdifferenz sich die Klappen 4, 5 zu öffnen beginnen. Die ersten konstruktiv festzulegenden Faktoren sind das Gewicht G und der Schwerpunktabstand 1 von den jeweiligen Achsen 7, 8. Als weiteres Kriterium ist die Neigung der Ebene 6 festzulegen. Je größer die Neigung ist, desto größer wird der Anteil der Gewichtskraft G der am Hebelarm 1 wirkt (im Beispiel 0,122 x G, bei Neigung 7°). Drittens ist der Winkel zwischen der Klappenebene 6 und den gedachten Vertikalebenen durch die Achsen 7, 8 auch kleiner als 90° wählbar. Beispielsweise könnte dieser Winkel nur 70° betragen, wobei dann die Klappen 4, 5 nicht mehr in ein und derselben Ebene 6 liegen würden. In der Folge heißt dies, die Klappen 4, 5 wären bei einem Winkel von β = 20° noch geschlossen und die Öffnungsbewegung beginnt erst bei diesem Winkel β, wobei dann von Anfang an etwas geringere Druckdifferenzen zum Öffnen der Klappen 4, 5 erforderlich wären als im gezeigten Beispiel. Wesentlich ist immer, daß das Drehmoment M, welches der Öffnung entgegen wirkt, mit zunehmender Öffnung geringer wird.

Sind die Klappen 4, 5 einmal etwas geöffnet, bewegen sie sich in ihre maximal geöffnete Position (an die Stege 10, 11, 12 heran) und verharren in dieser, auch wenn die Luftdruckdifferenz geringer wird. Sie schließen sich erst wieder, wenn ein nahezu vollständiger Druckausgleich stattgefunden hat, in dem sie mit zunehmender Kraft (innerhalb der Kurve 15 von rechts nach links) zufallen. Ein Flattern der Abschlußklappen ist nahezu ausgeschlossen und ein sehr effektiver Luftaustritt kann durch große Öffnungen der Entlüftungsvorrichtung erfolgen.

In der weiteren Ausführung der Erfindung wurde ein sehr effektiver Schutz vor dem Eindringen von Wasser in die Entlüftungsvorrichtung und damit in den Fahrzeuginnenraum I geschaffen. Dies ist von besonderer Bedeutung bei der weiter oben beschriebenen Ausbildung der Abschlußklappen 4, 5, da diese länger als bisher übliche Lösungen in ihrer maximal geöffneten Position verharren. Jedoch auch bei herkömmlich ausgebildeten Entlüftungsvorrichtungen ist eine im folgenden beschriebene Gehäuseausbildung von Vorteil. Das Gehäuse 1, speziell obere und untere Begrenzungswände 16, 17 des Gehäuses 1 sind in Richtung der Fahrzeugumgebung U geneigt ausgebildet, so daß dort auftreffendes Wasser nach außen abläuft. Insbesondere aus Fig. 4 ist dies ersichtlich. Die obere Gehäusewand 16 weist eine Bohrung 18 auf, durch die Wasser, welches sich innen im Bereich der Karosserie 2 sammelt, abläuft. Von der unteren Wand 17 des Gehäuses 1 kann Wasser direkt nach außen abfließen.

Hinter dem Gitter 9 ist das Gehäuse 1 zum Fahrzeuginnenraum I hin durch ein Wasserfangvlies 19 abgedeckt. Es verhindert das Eindringen von Wasser. Auftreffendes Wasser läuft nach unten auf die untere Wand 17. Je nach Gestaltung des Gitters 9 sind weitere Bohrungen 20 erforderlich, die den freien Abfluß des Wassers auf die Wand 17 gewährleisten.

## Patentansprüche

1. Entlüftungsvorrichtung zur Entlüftung des Innenraumes (I) eines Kraftfahrzeugs, mit zumindest einer, um eine Achse (7, 8) verschwenkbaren, als Rückluftklappe dienenden Abschlußklappe (4, 5), die in einer Schließstellung durch ihr Eigengewicht (G) an einem Gitter (9) eines Gehäuses (1) der Entlüftungsvorrichtung anliegt und in Abhängigkeit von Luftdruckdifferenzen zwischen dem Innenraum (I) und der Fahrzeugumgebung (U) in Offenstellungen beweglich ist, **dadurch gekennzeichnet,** daß die Abschlußklappe (4, 5) derart angeordnet ist, daß sich die Länge eines Hebelarmes, an dem die Gewichtskraft (G) der Abschlußklappe (4, 5) wirkt, beim Öffnen der Klappe (4, 5) verringert, wobei sich so beim Öffnen der Klappe (4, 5) ein aus ihrer Gewichtskraft (G) resultierendes Drehmoment (M) um die Achse (7, 8) in Richtung der vollständig geöffneten Stellung verringert.

2. Entlüftungsvorrichtung nach Anspruch 1, **dadurch gekennzeichnet,** daß die Achse (7, 8) der Abschlußklappe (4, 5) in einer vertikalen Ebene liegt und eine Klappenebene (6), in der die in der Schließstellung befindliche Abschlußklappe (4, 5) liegt, einen Winkel von kleiner oder gleich 90° mit dieser vertikalen Ebene einschließt, wobei sich dieser Winkel bei einer Öffnungsbewegung der Abschlußklappe (4, 5) verringert.

3. Entlüftungsvorrichtung nach Anspruch 1 oder 2, **dadurch gekennzeichnet,** daß ein Schwenkwinkel (β) der Abschlußklappe (4, 5) bei ihrer Verschwenkung zwischen der Schließstellung und einer maximal geöffneten Stellung geringer als 90° ist.

4. Entlüftungsvorrichtung nach einem der Ansprüche 1 bis 3, **dadurch gekennzeichnet,** daß die Achse (7, 8) der Abschlußklappe (4, 5) um zumindest 5° zur Vertikalen geneigt stehend angeordnet ist.

5. Entlüftungsvorrichtung nach zumindest einem der Ansprüche 1 bis 4, **dadurch gekennzeichnet,** daß die Achse (7, 8) der Abschlußklappe (4, 5) von einem im Gehäuse (1) eingespannten oder einteilig mit diesem verbundenen elastischen Abschnitt der Klappe (4, 5) definiert ist.

6. Entlüftungsvorrichtung nach zumindest einem der Ansprüche 1 bis 5, **dadurch gekennzeichnet,** daß obere und untere Begrenzungswände (16, 17) des Gehäuses (1) in Richtung der Fahrzeugumgebung (U) geneigt angeordnet sind und Wasser direkt oder durch Bohrungen (18, 20) des Gehäuses (1) nach außen abläuft.

7. Entlüftungsvorrichtung nach Anspruch 6, **dadurch gekennzeichnet,** daß zwischen der Abschlußklappe (4, 5) und dem Fahrzeuginnenraum (I) ein das Gehäuse (1) nach innen gegen eindringendes Wasser verschließendes Wasserfangvlies (19) im Gehäuse (1) angeordnet ist, von wo aus das Wasser auf die untere Begrenzungswand (17) abfließt.

## Claims

1. Ventilation apparatus for ventilation of the interior (I) of a motor vehicle, with at least one closure flap (4, 5) which is pivotable about an axis (7, 8) and serves as a return air flap and which in a closed position by its own weight (G) abuts against a grid (9) of a housing (1) of the ventilation apparatus and is movable into open positions as a function of air pressure differences between the interior (I) and the vehicle environment (U), characterised in that the closure flap (4, 5) is arranged in such a way that the length of a lever arm on which the weight (G) of the closure flap (4, 5) acts decreases on opening of the flap (4, 5), wherein thus on opening of the flap (4, 5) a torque (M) resulting from its weight (G) about the axis (7, 8) decreases in the direction of the fully open position.

2. Ventilation apparatus according to claim 1, characterised in that the axis (7, 8) of the closure flap (4, 5) lies in a vertical plane, and a flap plane (6) in which lies the closure flap (4, 5) located in the closed position forms an angle of less than or equal to 90° with this vertical plane, wherein this angle decreases in case of an opening movement of the closure flap (4, 5).

3. Ventilation apparatus according to claim 1 or 2, characterised in that a pivot angle (β) of the closure flap (4, 5) is less than 90° upon pivoting thereof between the closed position and a maximum open position.

4. Ventilation apparatus according to any of claims 1 to 3, characterised in that the axis (7, 8) of the closure flap (4, 5) is arranged upright at an angle of at least 5° to the vertical.

5. Ventilation apparatus according to one or more of claims 1 to 4, characterised in that the axis (7, 8) of the closure flap (4, 5) is defined by a resilient section of the flap (4, 5) mounted in the housing (1) or connected integrally thereto.

6. Ventilation apparatus according to one or more of claims 1 to 5, characterised in that upper and lower boundary walls (16, 17) of the housing (1) are inclined in the direction of the vehicle environment (U) and water runs out directly or through holes (18, 20) in the housing (1).

7. Ventilation apparatus according to claim 6, characterised in that between the closure flap (4, 5) and the vehicle interior (I) a water collecting fleece (19) which closes off the housing (1) inwardly against penetrating water is arranged in the housing (1), from where the water runs off onto the lower boundary wall (17).

## Revendications

1. Dispositif de ventilation pour ventiler l'habitacle (I) d'un véhicule automobile, comprenant au moins un volet de fermeture (4, 5) servant de volet anti-refoulement d'air, pivotant autour d'un axe (7, 8), qui, dans une position de fermeture, est appliqué par son propre poids (G) sur une grille (9) d'un boîtier (1) du dispositif de ventilation et peut être amené dans une position d'ouverture en fonction de différences de pression d'air entre l'habitacle (I) et l'environnement (U) du véhicule, caractérisé en ce que le volet de fermeture (4, 5) est disposé de telle sorte que la longueur d'un bras de levier, sur lequel agit la force de pesanteur (G) du volet de fermeture (4, 5), diminue lors de l'ouverture dudit volet (4, 5), un couple de rotation (M) autour de l'axe (7, 8), qui résulte de la force de pesanteur (G), diminuant en direction de la position d'ouverture complète.

2. Dispositif de ventilation selon la revendication 1, caractérisé en ce que l'axe (7, 8) du volet de fermeture (4, 5) est situé dans un plan vertical et en ce qu'un plan de volet (6), dans lequel le volet de fermeture (4,5) est situé dans la position de fermeture, forme un angle inférieur ou égal à 90° avec ledit plan vertical, cet angle diminuant lors d'un mouvement d'ouverture du volet de fermeture (4, 5).

3. Dispositif de ventilation selon la revendication 1 ou 2, caractérisé en ce qu'un angle de pivotement (β) du volet de fermeture (4, 5), lors du pivotement de ce dernier entre la position de fermeture et une position d'ouverture maximale, est inférieur à 90°.

4. Dispositif de ventilation selon une des revendications 1 à 3, caractérisé en ce que l'axe (7, 8) du volet de fermeture (4, 5) est incliné d'au moins 5° par rapport à la verticale.

5. Dispositif de ventilation selon au moins une des revendications 1 à 4, caractérisé en ce que l'axe (7, 8) du volet de fermeture (4, 5) est défini par une partie élastique du volet (4, 5) fixée au boîtier (1) ou venue d'une pièce avec celui-ci.

6. Dispositif de ventilation selon au moins une des revendications 1 à 5, caractérisé en ce que les parois supérieure et inférieure (16, 17) du boîtier (1) sont inclinées en direction de l'environnement (U) du véhicule et en ce que l'eau s'écoule vers l'extérieur de manière directe ou à travers des trous (18, 20) du boîtier (1).

7. Dispositif de ventilation selon la revendication 6, caractérisé en ce qu'un feutre (19) de retenue d'eau qui ferme le boîtier (1) en direction de l'habitacle ,contre les entrées d'eau, est disposé dans le boîtier (1) entre le volet de fermeture (4, 5) et l'habitacle (I) de véhicule, l'eau, de là , s'écoulant sur la paroi inférieure (17).s
